# EUROPEAN PATENT SPECIFICATION

(11) **EP 1 630 524 B1**
(45) Date of publication and mention of the grant of the patent: **29.09.2010**
(21) Application number: 05018541.2
(22) Date of filing: 25.08.2005
(51) Int. Cl.: G01C 21/34, G08G 1/0968

(54) **Navigation device, data structure, and route search and display method**
Navigationsgerät, Datenstruktur sowie Routensuch- und -anzeigeverfahren
Dispositif de navigation, structure de données et procédé de recherche et d'affichage d'itinéraire

(30) Priority: 27.08.2004 JP 2004249195
(43) Date of publication of application: 01.03.2006
(73) Proprietor: AISIN AW CO., LTD., Anjo, Aichi 444-1192 (JP)
(72) Inventor: Ishikawa, Hiroki, Okazaki Aichi 444-8564 (JP); Zaitsu, Tomoyuki, Okazaki Aichi 444-8564 (JP)
(74) Representative: TBK-Patent

(56) References cited:
- EP-A- 1 503 355
- WO-A-02/101331
- DE-A1- 10 159 711
- US-A1- 2004 038 671
- US-A1- 2004 054 468

## Description

The present invention relates to a navigation device including: a guidance route searching unit for searching for a guidance route to a specified destination based upon traffic information; a display unit for displaying the guidance route obtained by the guidance route searching unit; and traffic information which is stored and used by the guidance route searching unit for searching for the guidance route.

Furthermore, the present invention relates to calendar information data used in such a navigation device.

Conventional navigation devices perform guidance route searching. For example, according to Japanese Patent Laid-open Publication No. Hei. 10-19593, a navigation device calculates a guidance route based upon current traffic information and past traffic information. Past traffic information is stored as traffic information data based upon the day of the week and the time of day.

Additionally, conventional navigation methods store past traffic information for purposes other than the route searching, e.g., for estimating current traffic jam severity, and so forth. For example, in Japanese Unexamined Patent Application Publication No. 2001-118188, past traffic information is extracted that relates to conditions that are similar to the road name, time of day, date, day of the week, weather, and so forth of the search conditions, and the search results are displayed on a display unit. In Japanese Unexamined Patent Application Publication No. 2003-302229, the past traffic information is stored, so as to build up predetermined traffic information data. Information about the likelihood of traffic jams in the regions where traffic jams occur with high frequency is superimposed on the map.

Further, in conventional navigation devices, the search results for the guidance route are displayed on the display unit in a layout in which the determined guidance route is superimposed on the map including the route. The current position of the vehicle, the guidance direction, the current point in time, and other information are also displayed on the map.

The above conventional navigation devices have at least the following problems.

First, the above conventional navigation devices search for the guidance route using the traffic information stored therein. The obtained guidance route is then displayed on the display unit. However, as a result, the navigation device may display and recommend a route different from that anticipated by the user.

For example, if a route is searched on a national holiday, the navigation device may display a commuting route different from that identified on weekday. Also, in the case of route searching on a day in a consecutive holiday period, the navigation device may display a route different from the return route normally taken by the user. In these types of cases, the user may not understand the factors used by the navigation device for identifying the recommended guidance route. As a result, the user may doubt the effectiveness of the guidance route and the accuracy of the navigation device.

Second, the above conventional navigation devices and methods classify traffic determination factors such that may reduce the reliability of guidance routes and may increase route search time.

Document US 2004/054468 A1 discloses a navigation device that uses traffic information based on a route searching date searching for a guidance route, and which displays the recommended guidance route, route search date and route search time. Furthermore, a calendar is displayed on which certain items are marked which might have an effect on the traffic situation.

Document US 2004/038671 A1 discloses route searching based upon traffic forecast which depends on periods into which a year is divided, days of the week, consecutive holiday periods and a period within the consecutive holiday period, for example.

Document DE 101 59 711 A1 discloses a traffic information system, in which upon searching for a route, date and time is considered, wherein names of holiday periods or holidays are displayed together with route guidance information.

Document WO 02/101331 A discloses a navigation system, in which a route guidance is performed dynamically based on traffic information and predicted traffic information.

In view of at least one or more of the above problems it is an object of the present invention to provide a navigation device that can perform route searching at high speed, as well as assure the reliability of a guidance route obtained by route searching that is displayed on a display unit.

This object is solved by a navigation device as set out in claim 1 and alternatively by a storage medium as set out in claim 7 or by a method a set out in claim 8.

Further advantageous developments are set out in the dependent claims.

Exemplary implementations of the broad principles described herein will now be described with reference to the accompanying drawings, wherein:

FIG. 1 shows an exemplary navigation device;

FIG. 2 shows an exemplary map data relationship;

FIG. 3 shows an exemplary guidance route search method;

FIG. 4 shows an exemplary guidance route search method;

FIG. 5 shows an exemplary relationship between search determination factors and search display factors; and

FIG. 6 shows an exemplary display.

In general, a navigation device may include: a memory such as a CD-ROM, an IC card, or the like, in which map data is stored; a display unit; and a vehicle position detecting device including, for example, a gyrocompass, a Global Positioning System (GPS), and/or a vehicle speed sensor, or the like, for detecting a current position and a current direction of the vehicle.

The navigation device may read out the map data for the area including the current position of the vehicle, and may use the read out map data to display a map image for the area around the vehicle position on the display unit. At the same time, a vehicle position mark (location) may be superimposed on the display screen. This configuration allows the user to recognize the current position of the vehicle during driving with a single glance.

Furthermore, the navigation device may have a route guidance function that assists the user to drive to a desired destination. The route guidance function may calculate a least-costly route from the start point to the destination using the map data. The route may be displayed as a screen on the display unit for the user to see and understand.

The navigation device may store the calculated route as a guidance route during driving. The calculated route may be displayed on the map image, for example, in a different color from or with a heavier line than those of other roads. Furthermore, when the vehicle reaches and is within a predetermined distance from an intersection where the vehicle must turn, an arrow may be displayed on the intersection of the map image displayed on the screen. The arrow indicates the direction in which the vehicle must turn. Such functions allow the user to recognize the calculated route to the destination with ease.

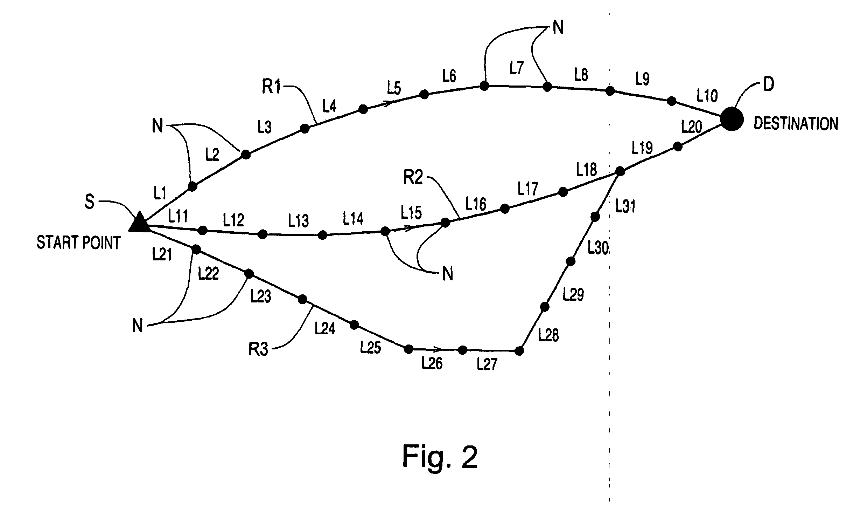

The map data may be stored as coordinate point sets, e.g., nodes N as shown in FIG. 2, each of which may be represented by a latitude and a longitude.

As shown in FIG. 2, a road may be represented by two or more nodes N and the lines therebetween. Note that the line between two nodes N is referred to as a "link" L. During route searching, the navigation device may calculate the cost required for driving the vehicle along each route represented by the combination of the nodes N and the links L, giving consideration to, for example, the time required for driving to the destination. Then, for example, the navigation device may determine the route with a minimum cost, and recommend that route to the user as a recommended guidance route.

Herein, the term cost as used here is a value that represents the degree of suitability of a guidance route in a numerical form. The cost is: a value obtained by multiplying the distance by a constant. The constant may be determined based on, for example, road width, road type (ordinary road, or expressway), frequency of left-turns, frequency of right-turns, and so forth; and/or an estimated driving time. Note that, even if two routes have exactly the same distance, the costs may be different depending upon additional conditions set by the user, such as, for example, whether to use toll roads and/or whether to prioritize the driving distance and/or the driving time.

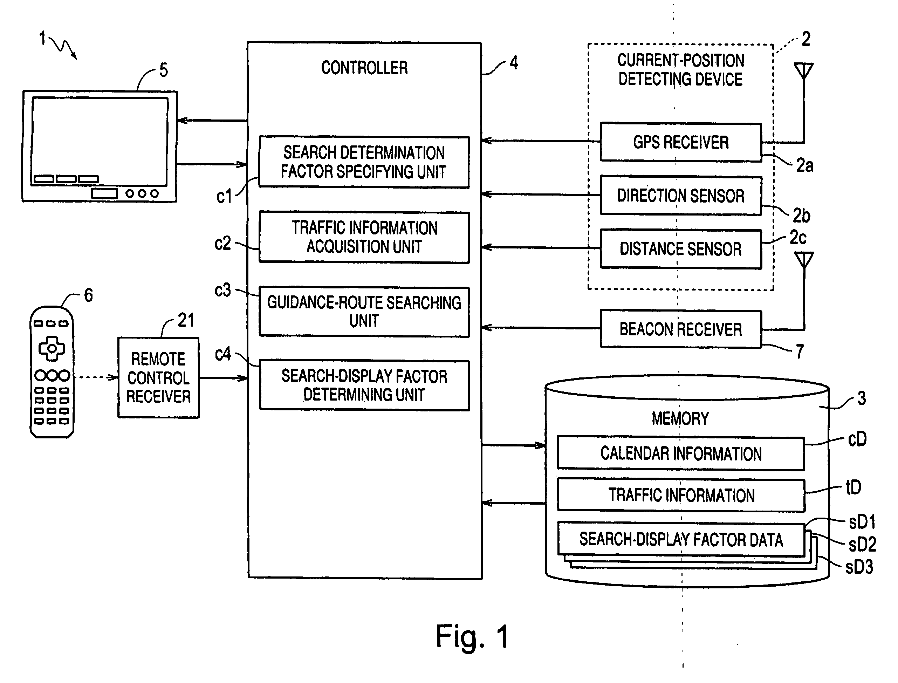

FIG. 1 is a block diagram that shows an exemplary navigation device 1. As shown in FIG. 1, the navigation device 1 may be physically, functionally, and/or conceptually include a current position detecting unit 2; a memory 3; a controller 4; a display unit 5; and/or a remote-control input unit 6. Furthermore, the navigation device 1 may include a beacon receiver 7.

In this example, the current position detecting unit 2 may include a Global Positioning System (GPS) receiver 2a, a direction detecting sensor 2b, and a distance detecting sensor 2c.

The GPS receiver 2a may receive signals from man-made satellites, thereby allowing the navigation device 1 to obtain various kinds of information such as, for example, the respective transmission dates of the signals, the position of the GPS receiver 2a, the movement speed of the GPS receiver 2a, and/or the movement direction of the GPS receiver 2a.

The direction sensor 2b may include, for example, a terrestrial magnetism sensor, a gyro-sensor, an optical turn sensor, a turn resistance knob mounted on a rotating portion of a steering wheel, and/or an angle sensor mounted on a wheel portion, and may detect the movement direction of the vehicle.

The distance sensor 2c may allow a movement distance of the vehicle to be detected and may include, for example, a sensor for detecting revolution of the wheels, a sensor for detecting acceleration of the vehicle, and/or a circuit for performing double integration of the detected acceleration.

The beacon receiver 7 may receive signals transmitted from, for example, signal transmitters installed at predetermined locations on roads. In particular, for example, the beacon receiver 7 may receive optical beacon signals or radio beacon signals transmitted from a Vehicle Information and Communication System (VICS®). Accordingly, The controller 4 may extract, for example, traffic jam information and/or current position information, from the VICS signal.

The memory 3 may include, for example, a recording medium, a drive unit, a hard disk drive, a DVD drive, a DVD-ROM, a CD drive, and/or CD-ROM, or the like. 2) Features of the navigation device 1 according to the present embodiment

The memory 3 may store, for example, calendar information data cD; traffic information data tD; search display factor data 1 sD1; search display factor data 2 sD2; and/or search display factor data 3 sD3.

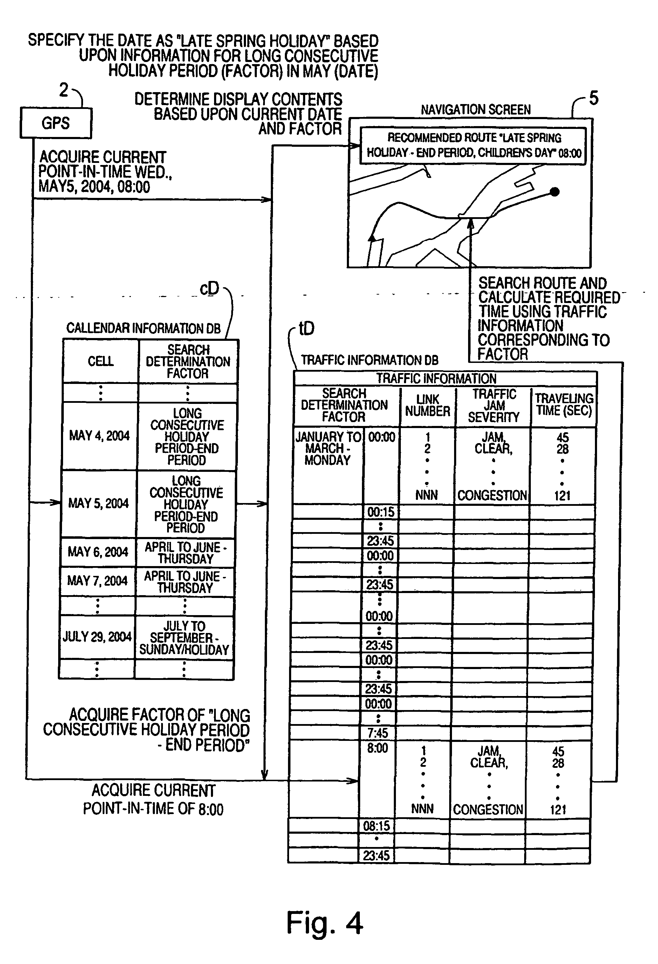

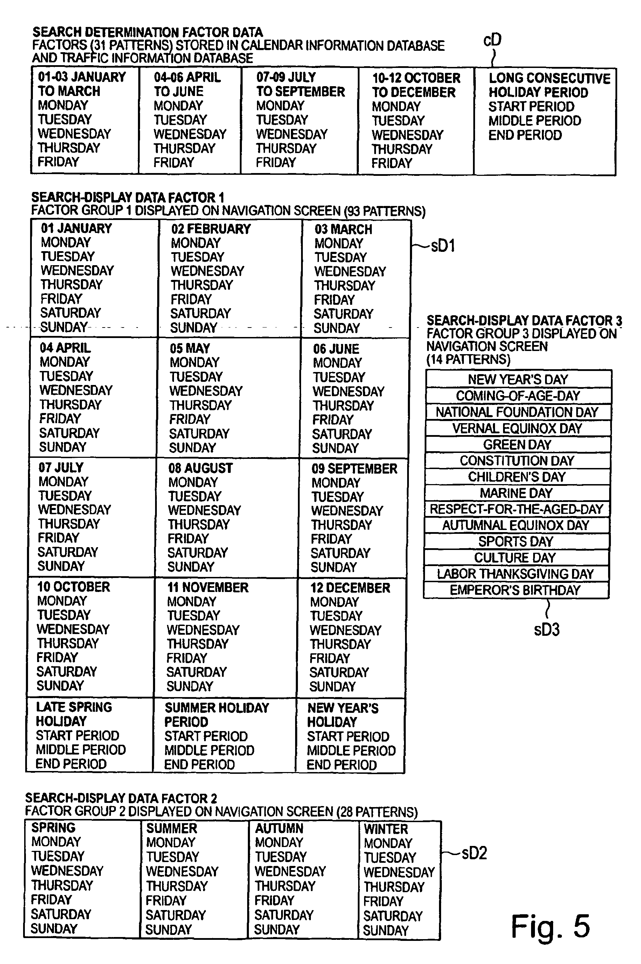

The calendar information data cD may include data in which search determination factors and dates are correlated for each date, for example, as shown in FIG. 4. Furthermore, as shown in FIG. 5, the date may be classified as follows for the search determination factors. A year may be divided into, for example, quarters (for example, January to May, April to June, July to September, October to December) each of which may have three months. Each quarter may be further classified based upon, for example, the day of the week, thereby classifying the date into 28 factors (i.e., 4 quarters, each with 7 days). In addition, each long consecutive holiday period may be classified into a start period, a middle period, and/or an end period, thereby establishing an additional three factors. As a result, a total of 31 search determination factors may be established.

With the calendar information data cD, a single search determination factor may be assigned to each date. The three holiday related search determination factors may be assigned a higher priority than the aforementioned 28 search determination factors.

According to the above structure of the calendar information data cD, once the date has been specified, the corresponding search determination factor can be determined in advance following a predetermined sequence.

As shown in FIG. 4, the traffic information data tD may be initially classified based upon the search determination factors. Furthermore, the traffic information may be further classified based upon, for example, the time of day.

Specifically, the traffic information data tD may be structured to store traffic information in fixed columns corresponding to, for example, the search determination factors and the time of day, which also serves as a route search factor. For the traffic information, the traffic jam severity (represented by, for example, "jam," "clear," and "congestion" in the drawing) and the driving time (represented by the value shown in increments of one second in the drawing) corresponding to all the links (represented by link numbers 1 to NNN in the drawing) may be used.

This traffic information may be obtained, for example, by performing a statistical determination of the traffic jam severity and/or the driving time extracted from past data for each link for the same search determination factor and time of day.

Thus, the traffic information data tD may be utilized to obtain statistical traffic information under factor conditions with the same search determination factor and the time of day.

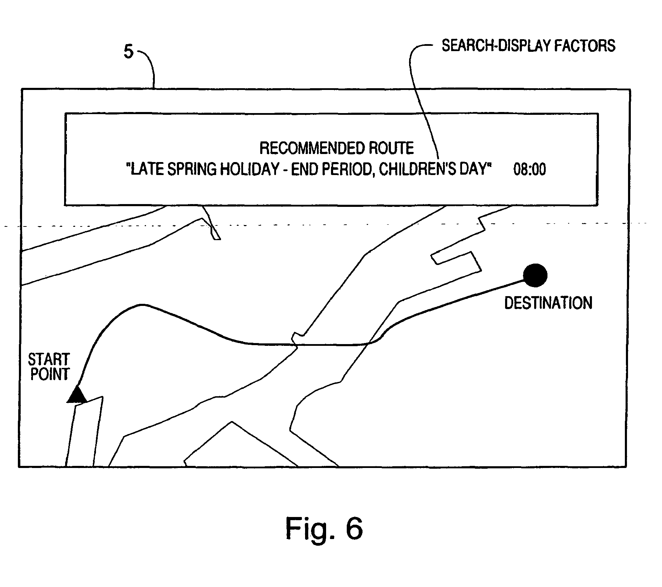

FIG. 5 shows an example of the search display factor data sD. When a recommended guidance route is determined by route searching, the navigation device 1 may display the search display factors as shown in FIG. 6, as well as the determined guidance route. The navigation device 1 may display suitable factors corresponding to the date for which the route search has been performed.

As shown in FIG. 5, the search display factor data sD may include the three groups of search display factor data 1 to 3, i.e., sD1, sD2, and sD3. A display factor within each group may be applicable to any specific date, and the navigation device 1 may display the applicable display factors on the display unit 5.

The search display factor data 1 sD1 may include 93 factors within its group. The search display factor data 2 sD2 may include 28 factors in its group and the search display factor data 3 sD3 may include 14 factors in its group.

Specifically, the search display factor data 1 sD1 may include, for example, combinations of the month and the day of the week and/or combinations of: one of the late spring vacation, the summer holiday, and New Year's holiday; and the start period, the middle period, and the end period thereof. (According to this example, various Japanese holiday periods and days are mentioned. However, the invention is in no way limited to these holiday periods and days, and may be applied to holiday periods and days of other countries or, indeed, to any chosen days.)

The search display factor data 2 sD2 may include combinations of the season and the day of the week. The search display factor data 3 sD3 may include a set of national holiday names. When the navigation device 1 displays the factors on the display unit 5, a factor may be selected from the groups of either the search display factor data 1 sD 1 and the search display factor data 2 sD2 (note that according to this example, the two data groups may not be used at the same time). Further, as will be described later, in the case that the specified date matches a certain national holiday, the navigation device 1 may also displays the national holiday name extracted from the search display factor data 3 sD3.

Returning to FIG. 1, the controller 4 may store and/or implement programs and/or instructions for achieving predetermined objectives. As shown in FIG. 1, the controller 4 may be physically, functionally, and/or conceptually include a search determination factor specifying unit c1, a traffic information acquisition unit c2, a guidance route searching unit c3, and a search display factor determining unit c4.

The search determination factor specifying unit c1 may specify the search determination factor corresponding to the date that is specified for the guidance route search, for example, obtained separately. Specifically, for example, the search determination factor specifying unit c1 may specify the search determination factor using the calendar information data cD shown in FIG. 4. In the example shown in FIG. 4, in which the date of "May 5, 2004" is specified, "Long consecutive holiday ― end period" is specified as the search determination factor.

The traffic information acquisition unit c2 may use the traffic information data tD to acquire the traffic information matching the factor corresponding to the specified search determination factor and the time of day, for example, specified separately.

In the example shown in FIG. 4, in which "long consecutive holiday period - end period" is specified as the search determination factor, the traffic information acquisition unit c2 may acquire the traffic information matching the "long consecutive holiday period - end period" and the time of day of 8:00, which according to the example is specified for route searching. The traffic information thus acquired serves as basic data used by the guidance route searching unit c3 for searching for the guidance route.

The guidance route searching unit c3 may search for and derive the guidance route to the destination based upon, for example, the traffic information satisfying the route determination factors obtained in the manner described above.

The guidance route searching unit c3 may search for the guidance route to the destination based upon the driving time for each link L, which is a component of the route R as shown in FIG. 2.

For example, as shown in FIG. 2, assume that the start point S and the destination D are specified for the route search. Furthermore, assume that routes R1, R2, and R3, each of which is a route connecting the aforementioned two points, are candidate routes. In this case, the guidance route searching unit c3 may treat each of the candidate routes R1, R2, and R3, as a set of consecutive links (L1, L2, ..., LNNN) forming the candidate routes.

The links L connect two specified points on the map. Accordingly, the driving time required for passing along the links L is calculated based upon the acquired traffic information.

With the traffic information data tD shown in FIG. 4 as described above, the driving time (e.g., 45 seconds, 28 seconds, ..., 121 seconds) may be determined for each of the links (L1, L2, ..., LNNN), represented by the link number with respect to the specified search determination factor (e.g., long consecutive holiday period - end period) and the time of day (e.g., 8:00), while taking into consideration the traffic jam severity ("jam," "clear," and "congestion").

Accordingly, it is possible to estimate the total driving time required for traveling the overall route for each of the candidate routes R1, R2, and R3. The driving time required for traveling the route may then be used as, for example, the cost, and the navigation device 1 may then determine the least-costly candidate route as the recommended guidance route.

For ease of explanation, the above example determines cost based upon the time required for traveling the route. However, the cost may be determined by considering alternative or additional factors, such as, for example, whether the road corresponding to the link L is a toll road and/or the time required for passing through the intersection in a case that the node N forming the link L is an intersection. Furthermore, other factors may include: the distance from the start point to the link L or the node N, the number of left turns and right turns, the road width, and/or the number of the traffic lanes.

The search display factor determining unit c4 may extract matching display factors from the search display factors sD based on the date specified for route searching and the search determination factors used for the route searching, and may determine the search display factors which are to be displayed on the display unit.

When the navigation device 1 displays the factors, a factor may be selected from the groups of the search display factor data 1 sD 1 or the search display factor data 2 sD2, as described previously. Furthermore, in the case that the specified date matches a national holiday, the holiday name extracted from the search display factor data 3 sD3 may also be determined as a search display factor.

Specifically, in the example shown in FIGS. 4 and 6, in which the date for route searching is May 5, 2004, when the search determination factor is "long consecutive holiday period - end period," "late spring holiday - the end period" (from sDl) and "Children's Day" (from sD3) may be displayed on the display unit 5.

That is to say, the search display factor determining unit c4 may refer to the date and determine that the day matches a day during the late spring holiday within the long consecutive holiday period. Accordingly, the search display factor determining unit c4 may determine the search display factor of "late spring holiday - the end period" from the search display factor data 1 sD1, and the display factor of "Children's Day" from the search display factor data 3 sD3, and may transmit the extracted information to the display unit 5.

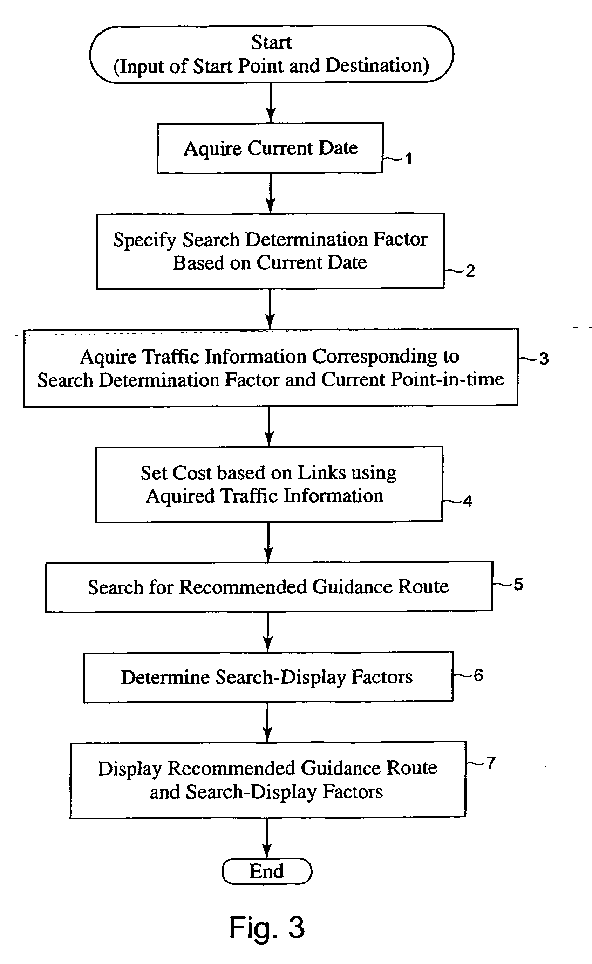

Next, an exemplary route search method will be described with reference to FIGS. 3 and 4. The exemplary method may be implemented, for example, by one or more components of the above-described navigation system. However, it should be appreciated that the exemplary method need not be limited by any of the above-described structure.

FIG. 3 is a flowchart that shows an exemplary route search method. FIG. 4 shows an example of the order in which information may be considered according to the method.

Initially a user may input inputs, for example, "start point S" and "destination D," for example, using the remote-control input unit 6. Accordingly, the route search begins. When this type of route searching request is made, the current date of, for example, "May 5, 2004" and the current point in time of "8:00" are acquired (Step S1). Next, the search determination factor of "long consecutive holiday period - end period" is determined based upon the calendar information data cD (Step 2), for example, by the search determination factor specifying unit c1.

### Steps 3 and 4

The traffic information satisfying the search determination factor and the current point in time is then acquired based upon the traffic information data tD (Step 3), for example, by the traffic information acquisition unit c2. Next, the route cost is determined based on the acquired traffic information for each link (Step 4).

Then, the guidance route R from the start point S to the destination D is searched using the traffic information acquired in the previous steps (Step 5), for example, by the guidance route searching unit c3. As a result, the recommended guidance route may be derived. For example, the navigation device 1 may select the least-costly route from multiple candidate routes R1, R2, and R3 that run between the start point S and the destination D, and employ the least-costly route as the recommended guidance route.

The date for route searching and the search determination factor is then referred to in order to determine the search display factors based upon the search display factor data (Step 6), for example, by the search display factor determining unit c4. FIGS. 4 and 6 show an example in which the search display factors of "late spring holiday - the end period, Children's Day" have been determined as the search display factors.

The guidance route identified in the above manner, the search display factor, and the time of day, is displayed (Step 7), for example, on the display unit 5. FIG. 6 shows a state in which "late spring holiday - the end period" and the time of day of 8:00 is displayed. Alternatively, the display unit may display "2004, late spring holiday - the end period, Children's Day, 8:00" or the display unit may just display a single piece of information, or may display various combinations of these pieces of information.

The date specified for guidance route searching may be acquired as follows. In the case that route searching is performed for the current point in time, the navigation device may acquire the current point in time using, for example, the GPS. In the case that the route searching is performed for a certain point in the future, the user may input the date for route searching. As a result, the search determination factor specifying unit c4 may specify the search determination factor corresponding to the date for route searching based upon the date input by the user. For example, as shown in FIG. 4, in the case that the date for route searching is "May 5, 2004," the search determination factor is specified as "long consecutive holiday period - end period."

According to one or more of the above-described examples, the user may confirm both the guidance route obtained by the navigation device and the factors used in guidance route searching at the same time.

As a result, even in a situation in which the recommended guidance route is different from the normal commuting route or the normal return route normally used, the user is able to confirm the factors used in guidance route searching, thereby providing them with assurance of the reliability of the guidance route, and why it may be different than expected.

Furthermore, according to one or more of the above-described examples, the device effectively has a calendar information function with a display mode. Accordingly, the user can be provided with suitable information with regard to driving at the current time or in the future (information that combines the date of driving, the implications of the date and the time of day, the driving route, and so forth).

According to one or more of the above-described examples, the search determination factors and the search display factors are set to be different from each other. If the search determination factors are set to be different from the search display factors, it is possible to use relatively rough search determination factors, i.e., a relatively small number, while using relatively detailed search display factors. Accordingly, it is possible to display the relatively detailed search display factors such that the user can readily understand them.

According to one or more of the above-described examples, the number of the search determination factors may be less than the number of search display factors. Accordingly, it is possible to perform guidance route searching at high speed as a result of the reduced data amount of the determination factor data. Furthermore, real past traffic information that has been subjected to statistical processing is used for the traffic information, and thus data creation can be performed simply.

Note that the aforementioned search determination factors preferably include search determination factors for divided periods/days of the week classified based upon multiple divided periods of a year and the days of the week, and search determination factors for consecutive holiday periods classified based upon the consecutive holidays and the period within the consecutive holiday period.

The traffic state changes may change greatly between consecutive holiday periods and periods outside of them. Furthermore, there are changes between the multiple divided periods into which a year is divided, such as the seasons, summer, winter, and so forth, and the days of the week. Accordingly, the above described examples, by including these items as determination factors, favorably provide a macroscopic classification of the traffic state throughout a year, thereby enabling guidance route searching to be performed effectively and with high-speed.

According to one or more of the above-described examples, the traffic trends throughout the year can be effectively represented with an arrangement including only the day of the week as the determination factor. On the other hand, route searching can be performed using a smaller amount of data than with an arrangement including separate determination factors for each date, thereby enabling high-speed determination of the guidance route.

According to one or more of the above-described examples, a single search determination factor may be set for each date. Furthermore, the consecutive holiday period search determination factors may be used with a higher priority than the aforementioned divided period/day of the week search determination factors.

Specifically, it may be determined which divided period/day of the week search determination factor the date belongs to, and whether or not the date matches any consecutive holiday period, at the same time. Thus, in terms of the traffic information used in guidance route searching, the consecutive holiday period search determination factor is far more important. Accordingly, a single search determination factor may be set for each date, and the consecutive holiday period search determination factor may be used with a higher priority than the aforementioned divided period/day of the week search determination factors. Such an arrangement enables appropriate guidance route searching based upon suitable traffic information.

As described above, the search determination factors are factors that can be effectively used in guidance route searching. On the other hand, the search display factors take a form that enables the user to understand the displayed factors as easily as possible.

According to one or more of the above-described examples, the search display factors may include one or more kinds of: month/day of the week display factors classified based upon the month and the day of the week; season/day of the week display factors classified based upon the season and the day of the week; consecutive holiday period name display factors showing consecutive holiday period names; and holiday name display factors showing holiday names.

In the case of employing the month/day of the week-display factors, the month and the day of week may be displayed. In the case of employing the season/day of the week display factors, the season and the day of week may be displayed. In the case of employing the consecutive holiday period name display factors, the consecutive holiday period name may be displayed such as the late spring holiday, the summer holiday, the New Year's Holiday, and so forth. In the case of employing the holiday name display factors, the national holiday names such as New Year's Day, Coming-of-Age Day, National Foundation Day, Vernal Equinox Day, and so forth may be displayed.

The above described navigation device may display the guidance route and the display factors which represent the traffic state on the date specified for route searching in a relatively specific manner, thereby providing an easy-to-use device which is user-friendly.

Furthermore, either the month/day of the week display factor or the season/day of the week display factor; and the aforementioned holiday name display factor, may be displayed at the same time. In the case that one of the month/day of the week display factors or the season/day of the week display factors, and one of the aforementioned holiday name display factors are relevant, both factors may be displayed at the same time, thereby notifying the user of the implications of the date for guidance route searching in a clearer manner.

Furthermore, the display unit may display the point in time specified for route searching. This is because the traffic state greatly changes depending upon the point in time, even during one day. Accordingly, by displaying the point in time factor, it is possible to make clear to the user the significance of the identified guidance route from the perspective of the point in time.

When the calendar information data with the above described data structure is utilized, it is possible to provide a navigation device that can appropriately and rapidly identify a suitable guidance route throughout the year based upon past traffic information.

While various features have been described in conjunction with the examples outlined above, various alternatives, modifications, variations, and/or improvements of those features and/or examples may be possible. Accordingly, the examples, as set forth above, are intended to be illustrative. Various changes may be made without departing from the scope of the invention as claimed.

For example, the above-described principles may be applied to a navigation device configured by installing predetermined software on a personal computer, or a navigation device provided as an accessory function of a cellular phone.

For example, the navigation device may search the guidance route with regard to a desired date and a desired time input by the user. In this case, the information relating to the date and the point in time thus specified is displayed on the display unit.

For example, the season and the day of the week may be employed as the search determination factors. That is to say, for the search display factors, a year may be divided into multiple periods such as the seasons, quarters, summer season - winter season, or the like. Then, these factors for divided periods and days of the week may be favorably employed as the search determination factors.

As described above, a navigation device and route search and display method acquire a route search date and route search time and specify a search determination factor based on the route search date. The device and method acquire traffic information corresponding to the specified search determination factor and the route search time and search for a recommended guidance route based on the acquired traffic information. The device and method determine a search display factor based on the route search date and display the recommended guidance route and search display factor. A data structure stores search determination factors.

## Claims

1. A navigation device comprising:
a memory **(3)** that is adapted to store:
search determination factors, which represent traffic trend, correlated to dates; and
traffic information corresponding to a specified search determination factor; and
search display factors, which represent calendar information, based upon the dates and upon the search determination factors; and
a controller **(4)** that is adapted to:
specify a search determination factor corresponding to a route searching date for guidance route searching;
search for a guidance route to a specified destination based upon the traffic information corresponding to the specified search determination factor;
determine a search display factor based upon the route searching date and the search determination factor; and
display the guidance route and the search display factor.

2. The navigation device of claim 1, wherein the number of the search determination factors is less than the number of the search display factors.

3. The navigation device of one of claims 1 to 2, wherein the search determination factors comprise:
first search determination factors classified based upon multiple periods into which a year is divided and upon days of the week; and
second search determination factors classified based upon consecutive holiday periods and a period within the consecutive holiday period.

4. The navigation device of claim 3, wherein:
a single search determination factor is set for each date; and
the second search determination factors have a higher priority than the first search determination factors.

5. The navigation device of one of claims 1 to 4, wherein the search display factors comprise at least one of:
first search display factors representing combinations of a month and a day of the week;
second search display factors representing combinations of a season and a day of the week;
third search display factors formed of names of consecutive holiday periods; and
fourth search display factors formed of names of holidays.

6. The navigation device of one of claims 1 to 5, wherein the controller **(4)** is adapted to display a route searching time.

7. A storage medium storing a data structure, the data structure comprising:
calendar information data for use in a navigation device, in which calendar information data a search determination factor, which represents traffic trend, used for route searching corresponds to each date, the calendar information data comprising:
first search determination factors classified based upon multiple periods into which a year is divided and upon days of the week; and
second search determination factors classified based upon consecutive holiday periods and a period within the consecutive holiday period;
the storage medium further comprising software code portions for, when the program is run on a computer, performing the step of:
setting, if a route search date matches a consecutive holiday period within the second search determination factors, the second search determination factor corresponding to the date as the search determination factor corresponding to that date.

8. A method for searching for and displaying a route, comprising:
acquiring a route search date and route search time **(S1) ;**
specifying a search determination factor, which represents traffic trend, based on the route search date **(S2) ;**
acquiring traffic information corresponding to the specified search determination factor and the route search time **(S3) ;**
searching for a recommended guidance route based on the acquired traffic information **(S5) ;**
determining a search display factor, which represents calendar information, based on the route search date and upon the search determination factor **(S6) ;** and
displaying the recommended guidance route and search display factor **(S7)**.

## Patentansprüche

1. Navigationsvorrichtung mit:
einem Speicher (3), der angepasst ist zum Speichern von:
Suchbestimmungsfaktoren, die eine Verkehrstendenz darstellen, wobei sie mit Daten korreliert sind; und
Verkehrsinformationen, die einem spezifizierten Suchbestimmungsfaktor entsprechen; und
Suchanzeigefaktoren, die Kalenderinformationen darstellen, wobei sie auf den Daten und auf den Suchbestimmungsfaktoren basieren; und
einer Steuereinrichtung (4), die angepasst ist zum:
Spezifizieren eines Suchbestimmungsfaktors, der einem Routensuchdatum entspricht, für eine Zielführungsroutensuche;
Suchen nach einer Zielführungsroute zu einem spezifizierten Ziel basierend auf den dem spezifizierten Suchbestimmungsfaktor entsprechenden Verkehrsinformationen;
Bestimmen eines Suchanzeigefaktors basierend auf dem Routensuchdatum und dem Suchbestimmungsfaktor; und
Anzeigen der Zielführungsroute und des Suchanzeigefaktors.

2. Navigationsvorrichtung gemäß Anspruch 1, wobei die Anzahl der Suchbestimmungsfaktoren geringer ist als die Anzahl der Suchanzeigefaktoren.

3. Navigationsvorrichtung gemäß einem der Ansprüche 1 bis 2, wobei die Suchbestimmungsfaktoren aufweisen:
erste Suchbestimmungsfaktoren, die basierend auf mehreren Zeiträumen, in die ein Jahr unterteilt ist, und Wochentagen klassifiziert sind; und
zweite Suchbestimmungsfaktoren, die basierend auf Zeiträumen aufeinanderfolgender Feiertage und einem Zeitraum innerhalb des Zeitraums aufeinanderfolgender Feiertage klassifiziert sind.

4. Navigationsvorrichtung gemäß Anspruch 3, wobei:
ein einzelner Suchbestimmungsfaktor für jedes Datum festgelegt ist; und
die zweiten Suchbestimmungsfaktoren eine höhere Priorität als die ersten Suchbestimmungsfaktoren aufweisen.

5. Navigationsvorrichtung gemäß einem der Ansprüche 1 bis 4, wobei die Suchanzeigefaktoren aufweisen:
erste Suchanzeigefaktoren, die Kombinationen eines Monats und eines Wochentags darstellen; und/oder
zweite Suchanzeigefaktoren, die Kombinationen einer Jahreszeit und eines Wochentags darstellen; und/oder
dritte Suchanzeigefaktoren, die aus Namen von Zeiträumen aufeinanderfolgender Feiertage gebildet sind; und/oder
vierte Suchanzeigefaktoren, die aus Namen von Feiertagen gebildet sind.

6. Navigationsvorrichtung gemäß einem der Ansprüche 1 bis 5, wobei die Steuereinrichtung (4) angepasst ist zum Anzeigen einer Routensuchzeit.

7. Speichermedium, das eine Datenstruktur speichert, wobei die Datenstruktur aufweist:
Kalenderinformationsdaten zur Verwendung in einer Navigationsvorrichtung, wobei in diesen Kalenderinformationsdaten jedem Datum ein für eine Routensuche verwendeter Suchbestimmungsfaktor entspricht, der eine Verkehrstendenz darstellt, wobei die Kalenderinformationsdaten aufweisen:
erste Suchbestimmungsfaktoren, die basierend auf mehreren Zeiträumen, in die ein Jahr unterteilt ist, und Wochentagen klassifiziert sind; und
zweite Suchbestimmungsfaktoren, die basierend auf Zeiträumen aufeinanderfolgender Feiertage und einem Zeitraum innerhalb des Zeitraums aufeinanderfolgender Feiertage klassifiziert sind;
wobei das Speichermedium ferner Softwarecodeteile aufweist, um, wenn das Programm auf einem Computer ausgeführt wird, den Schritt durchzuführen:
Festlegen des dem Datum entsprechenden zweiten Suchbestimmungsfaktors als den diesem Datum entsprechenden Suchbestimmungsfaktor, falls ein Routensuchdatum mit einem Zeitraum aufeinanderfolgender Feiertage innerhalb der zweiten Suchbestimmungsfaktoren übereinstimmt .

8. Verfahren zum Suchen nach und Anzeigen von einer Route mit:
Erlangen eines Routensuchdatums und einer Routensuchzeit (S1);
Spezifizieren eines Suchbestimmungsfaktors, der eine Verkehrstendenz darstellt, basierend auf dem Routensuchdatum (S2) ;
Erlangen von Verkehrsinformationen, die dem spezifizierten Suchbestimmungsfaktor und der Routensuchzeit entsprechen (S3);
Suchen nach einer empfohlenen Zielführungsroute basierend auf den erlangten Verkehrsinformationen (S5);
Bestimmen eines Suchanzeigefaktors, der Kalenderinformationen darstellt, basierend auf dem Routensuchdatum und auf dem Suchbestimmungsfaktor (S6); und
Anzeigen der empfohlenen Zielführungsroute und des Suchanzeigefaktors (S7).

## Revendications

1. Dispositif de navigation comprenant :
une mémoire (3) qui est adaptée pour stocker :
des facteurs de détermination de recherche, qui représentent une tendance de trafic, corrélée à des dates ; et
des informations de trafic correspondant à un facteur de déterminations de recherche spécifié ; et
des facteurs d'affichage de recherche, qui représentent des informations de calendrier, sur la base des dates et des facteurs de détermination de recherche ; et
une unité de commande (4) qui est adaptée pour :
spécifier un facteur de détermination de recherche correspondant à une date de recherche de route pour une recherche de route de guidage ;
rechercher une route de guidage vers une destination spécifiée basé sur des informations de trafic correspondant à un facteur de détermination de recherche spécifié ;
déterminer un facteur d'affichage de recherche basé sur la date de recherche de route et le facteur de détermination de recherche ; et
afficher la route de guidage et le facteur d'affichage de recherche.

2. Dispositif de navigation selon la revendication 1, dans lequel le nombre de facteurs de détermination de recherche est inférieur au nombre de facteurs d'affichage de recherche.

3. Dispositif de navigation selon l'une des revendications 1 à 2, dans lequel les facteurs de détermination de recherche comprennent :
des premiers facteurs de détermination de recherche classifiés sur la base de multiples périodes dans lesquelles une année est divisée et de jours de la semaine ; et
des seconds facteurs de détermination de recherche classifiés sur la base de périodes de vacances consécutives et d'une période dans la période de vacances consécutive.

4. Dispositif de navigation selon la revendication 3, dans lequel :
un facteur de détermination de recherche unique est établi pour chaque date ; et
les seconds facteurs de détermination de recherche ont une priorité plus élevée que les premiers facteurs de détermination de recherche.

5. Dispositif de navigation selon l'une des revendications 1 à 4, dans lequel les facteurs d'affichage de recherche comprennent au moins l'un de :
des premiers facteurs d'affichage de recherche représentant des combinaisons d'un mois et d'un jour de la semaine ;
des seconds facteurs d'affichage de recherche représentant des combinaisons d'une saison et d'un jour de la semaine ;
des troisièmes facteurs d'affichage de recherche formés de noms de périodes de vacances consécutives ; et
des quatrièmes facteurs d'affichage de recherche formés des noms des vacances.

6. Dispositif de navigation selon l'une des revendications 1 à 5, dans lequel l'unité de commande (4) est adaptée pour afficher un temps de recherche de route.

7. Support de stockage stockant une structure de données, la structure de données comprenant :
des données d'informations de calendrier pour une utilisation dans un dispositif de navigation, dans lesquelles données d'informations de calendrier, un facteur de détermination de recherche, qui représente une tendance de trafic, utilisé pour une recherche de route correspond à chaque date, les données d'informations de calendrier comprenant :
des premiers facteurs de détermination de recherche classifiés sur la base de multiples périodes dans lesquelles une année est divisée et de jours de la semaine ; et
des seconds facteurs de détermination de recherche classifiés sur la base de périodes de vacances consécutives et d'une période dans la période de vacances consécutive ;
le support de stockage comprenant en outre des portions de code de logiciel, lorsque le programme est exécuté sur un ordinateur, effectuant l'étape consistant à :
établir, si la date de recherche de route correspond à une période de vacances consécutive dans les seconds facteurs de détermination de recherche, le second facteur de détermination de recherche correspondant à la date lorsque le facteur de détermination de recherche correspond à cette date.

8. Procédé de recherche et d'affichage d'une route, comprenant les étapes consistant à :
acquérir une date de recherche de route et un temps de recherche de route (S1) ;
spécifier un facteur de détermination de recherche, qui représente une tendance de trafic, sur la base de la date de recherche de route (S2) ;
acquérir des informations de trafic correspondant au facteur de détermination de recherche et au temps de recherche de route spécifiés (S3) ;
rechercher une route de guidage recommandée sur la base des informations de trafic acquises (S5) ;
déterminer un facteur d'affichage de recherche, qui représente des informations de calendrier, sur la base de la date de recherche de route et du facteur de détermination de recherche (S6) ; et
afficher la route de guidage recommandée et le facteur d'affiche de recherche (S7).
